(19) Europäisches Patentamt
European Patent Office
Office européen des brevets

(11) EP 2 379 664 B1

(12) # EUROPÄISCHE PATENTSCHRIFT

(45) Veröffentlichungstag und Bekanntmachung des Hinweises auf die Patenterteilung:
**25.06.2014 Patentblatt 2014/26**

(21) Anmeldenummer: **09764841.4**

(22) Anmeldetag: **07.12.2009**

(51) Int Cl.:
***C09J 133/00*** *(2006.01)*

(86) Internationale Anmeldenummer:
**PCT/EP2009/066505**

(87) Internationale Veröffentlichungsnummer:
**WO 2010/069800 (24.06.2010 Gazette 2010/25)**

(54) **HAFTKLEBEMASSEN AUF BASIS VON NATURKAUTSCHUK UND POLYACRYLATEN**

PRESSURE-SENSITIVE ADHESIVES BASED ON NATURAL RUBBER AND POLYACRYLATES

MATIÈRES AUTO-ADHÉSIVES À BASE DE CAOUTCHOUC NATUREL ET DE POLYACRYLATES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **17.12.2008 DE 102008062368**

(43) Veröffentlichungstag der Anmeldung:
**26.10.2011 Patentblatt 2011/43**

(73) Patentinhaber: **TESA SE**
**20253 Hamburg (DE)**

(72) Erfinder:
- **CZERWONATIS, Franziska**
**21075 Hamburg (DE)**
- **BHANDARI, Sabine**
**20457 Hamburg (DE)**
- **KREFT, Christian**
**20255 Hamburg (DE)**
- **BURMEISTER, Axel**
**22527 Hamburg (DE)**
- **BÜNZ, Stephan**
**25746 Ostrohe (DE)**

(56) Entgegenhaltungen:
**EP-A1- 1 978 069 DE-A1- 2 340 040**

**EP 2 379 664 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft eine neue Haftklebemasse, ein Verfahren zu ihrer Herstellung sowie die Verwendung derselben als Selbstklebeband mit verbesserten Eigenschaften.

Haftklebemassen sind seit Jahrzehnten bekannt. Als Haftklebemassen werden Klebemassen bezeichnet, die bereits unter relativ schwachem Andruck eine dauerhafte Verbindung mit dem Haftgrund erlauben und nach Gebrauch im Wesentlichen rückstandsfrei vom Haftgrund wieder abgelöst werden können. Haftklebemassen wirken bei Raumtemperatur permanent haftklebrig, weisen also eine hinreichend geringe Viskosität und eine hohe Anfassklebrigkeit auf, so dass sie die Oberfläche des jeweiligen Klebegrunds bereits bei geringem Andruck benetzen. Die Verklebbarkeit der Klebemassen beruht auf ihren adhäsiven Eigenschaften und die Wiederablösbarkeit auf ihren kohäsiven Eigenschaften. Als Basis für Haftklebemassen kommen verschiedene Verbindungen in Frage. Als Hauptgruppen sind Naturkautschuke, synthetische Kautschuke sowie Acrylate zu nennen.

Haftklebemassen auf Basis von Naturkautschuk sind seit langem bekannt.

Naturkautschuk verfügt über sehr gute kohäsive Eigenschaften. Allerdings stellt die mangelnde Alterungs- und Witterungsbeständigkeit ein Problem dar.

In der CA 698 518 wird ein Prozess beschrieben, wie eine Masseherstellung durch Zusatz hoher Weichmacheranteile und/oder gleichzeitig starker Mastikation des Kautschuks zu erreichen ist. Zwar lassen sich nach diesem Verfahren Haftkleber mit extrem hoher Anfassklebkraft erzielen, durch den relativ hohen Weichmacheranteil oder auch den starken Abbau der Molekularstruktur des Elastomers auf ein Molekulargewichtsmittel von Mm $\leq$ 1 Million ist die anwendergerechte Scherfestigkeit auch mit anschließender höherer Vernetzung nur eingeschränkt zu erreichen.

Die Verwendung von Polymerblends, in denen neben nicht-thermoplastischem Naturkautschuk auch Blockcopolymere im Verhältnis von ca. 1:1 eingesetzt werden, stellt im Wesentlichen eine unbefriedigende Kompromisslösung dar, da weder hohe Scherfestigkeiten beim Einsatz der Selbstklebebänder bei höheren Temperaturen, noch deutliche Verbesserungen gegenüber der im Patent beschriebenen Eigenschaften ergibt.

JP 07 324 182 A2 beschreibt ein mehrstufiges Verfahren, in dem ein doppelseitig klebendes Band eine Haftklebeschicht auf Basis eines Acrylharzklebers und eine zweite Schicht aus einem Blend aus Isopren-Styrol-Elastomer, Naturkautschuk und nicht reaktivem Kohlenwasserstoffharz (Arkon P 100) aufweist. Dieses Band dient als Teppichverlegeband, bei dem ebenfalls keine erhöhten Anforderungen an die Scherfestigkeit bei höheren Temperaturen gestellt sind.

Der Einsatz von nicht-thermoplastischen Elastomeren wird ferner beschrieben in JP 95 331 197, in der ein Isocyanat-reaktiver Naturkautschuk (Polyisopren gepfropft mit Maleinsäureester) mit einem mittleren Molekulargewicht unterhalb 1 Million mit aliphatischen, nichtreaktiven Kohlenwasserstoffharzen Verwendung findet, der mit blockierten Isocyanaten (zum Beispiel Desmodur CT) vernetzt wird, wobei die Mischung bei 150 °C fünf Minuten lang vorvernetzt und nach anschließendem Ausstreichen auf PET-Folie bei 180 °C mehrere Minuten (zum Beispiel 15 Minuten) lang ausgehärtet wird. Diese Verfahrensweise macht deutlich, wie aufwendig eine Nachvernetzung zu erreichen ist, wenn der Naturkautschuk einem zu starken Abbau während des Herstellprozesses unterworfen wird.

In der Patentanmeldung JP 95 278 509 wird ein Selbstklebeband geschützt, bei welchem der Naturkautschuk auf ein mittleres Molekulargewicht von $M_w$ = 100.000 bis 500.000 mastiziert wird, um eine streichfähige homogene Mischung mit Kohlenwasserstoff-, Kolophonium-/derivat-, Terpen-Harzen zu erhalten, die zwischen 140 °C und 200 °C und einer Streichviskosität von 10 bis 50 x $10^3$ cps gut verarbeitbar sind, die jedoch eine anschließende extrem hohe ESH-Dosis (40 Mrad) erfordern, um die für den Gebrauch notwendige Scherfestigkeit zu gewährleisten. Für Trägermaterialien wie imprägnierte und/oder geleimte Papiere sowie Gewebeträger auf Basis Zellwolle u.ä. ist das System wenig tauglich, da bei den erforderlich hohen Strahlendosen eine signifikante Trägerschädigung erfolgt.

Der Einsatz von ausschließlich nicht-thermoplastischen Kautschuken als Elastomerkomponente in der Haftkleberrezeptierung mit dem bestehenden Kostenvorteil, den zum Beispiel Naturkautschuke gegenüber den handelsüblichen Blockcopolymeren aufweisen, und den herausragenden Eigenschaften, insbesondere der Scherfestigkeit des Naturkautschuks und entsprechender Synthesekautschuke, wird auch in den Patenten WO 94 11 175, WO 95 25 774, WO 97 07 963 und entsprechend US 5,539,033, US 5,550,175 ausführlich dargestellt.
Hierbei werden die in der Haftklebertechnik gebräuchlichen Zusätze wie Tackifier-Harze, Weichmacher und Füllstoffe beschrieben.

Das jeweils offenbarte Herstellungsverfahren basiert auf einem Doppelschneckenextruder, der bei der gewählten Prozessführung über Mastikation des Kautschuks und anschließender stufenweise Zugabe der einzelnen Zusätze mit einer entsprechenden Temperaturführung die Compoundierung zu einer homogenen Haftkleberabmischung ermöglicht. Ausführlich wird der dem eigentlichen Herstellprozess vorgeschaltete Mastikationsschritt des Kautschuks beschrieben. Er ist notwendig und charakteristisch für das gewählte Verfahren, da er bei der dort gewählten Technologie unumgänglich für die nachfolgende Aufnahme der weiteren Komponenten und für die Extrudierbarkeit der fertig abgemischten Masse ist. Beschrieben wird auch die Einspeisung von Luftsauerstoff, wie sie von R. Brzoskowski, J.L. und B. Kalvani in Kunststoffe 80 (8), (1990), S. 922 ff., empfohlen wird, um die Kautschukmastikation zu beschleunigen.

Diese Verfahrensweise macht den nachfolgenden Schritt der Elektronenstrahlenvernetzung (ESH) unumgänglich, ebenso wie den Einsatz von reaktiven Substanzen als ESH-Promotoren zum Erzielen einer effektiven Vernetzungsausbeute.

Beide Verfahrensschritte sind in den genannten Patenten beschrieben, die gewählten ESH-Promotoren neigen aber auch zu unerwünschten chemischen Vernetzungsreaktionen unter erhöhten Temperaturen. Dies limitiert den Einsatz bestimmter klebrig machender Harze. Auch Haftklebemassen auf Basis von Polyacrylaten sind seit langem bekannt. Polyacrylate verfügen über sehr gute adhäsive Eigenschaften, im Bereich der Kohäsion sind Polyacrylate anderen Verbindungen jedoch unterliegen.

Aufgabe der vorliegenden Erfindung war es daher, eine Haftklebemasse zur Verfügung zu stellen, die bei guten kohäsiven Eigenschaften eine gute Witterungs- und Alterungsbeständigkeit aufweist.

Überraschenderweise wurde gefunden, dass eine homogene Mischung aus Naturkautschuk und mindestens einer Polyacrylatkomponente auch die positiven Eigenschaften der beiden Substanzen verbindet, d.h. eine solche homogene Mischung über gute kohäsive Eigenschaften verfügt, dabei jedoch eine gegenüber Naturkautschuk deutlich gesteigerte Alterungs- und Witterungsbeständigkeit aufweist.

Homogen im Sinne der vorliegenden Erfindung bedeutet dabei mesoskopisch und makroskopisch homogen sowie richtungsunabhängig in den Eigenschaften, d.h. es handelt sich bei den erfindungsgemäßen Verbindungen um isotrope Materialien.

Die Basis für die kautschukbasierenden Klebemassen ist Naturkautschuk oder sie besteht aus einem beliebigen Blend aus Naturkautschuken und Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Als Polyacrylatkomponente im Sinne dieser Erfindung wird jede Verbindung bezeichnet, die aus einem Polymer besteht, dessen Grundgerüst acrylatartige Monomere aufweist.

Die Gruppe der acrylatartigen Monomere besteht aus sämtlichen Verbindungen mit einer Struktur, die sich von der Struktur von unsubstituierter oder substituierter Acrylsäure oder Methacrylsäure oder aber aus Estern dieser Verbindungen herleiten lässt, die sich durch die allgemeine Formel $CH_2=C(R^1)(COOR^2)$ beschreiben lassen, wobei der Rest $R^1$ ein Wasserstoffatom oder eine Methylgruppe sein kann und der Rest $R^2$ ein Wasserstoffatom sein kann oder aber aus der Gruppe der gesättigten, unverzweigten oder verzweigten, substituierten oder unsubstituierten $C_1$- bis $C_{30}$-Alkylgruppen gewählt ist.

Als acrylatartige Monomere sind grundsätzlich sämtliche der oben beschriebenen Gruppe dieser Verbindungen einsetzbar, wobei sich deren konkrete Auswahl und deren Mengenverhältnis nach den jeweiligen Anforderungen des beabsichtigten Anwendungsbereiches bemisst.

So können etwa als acrylatartige Monomere auch solche Acryl- und Methacrylsäureester eingesetzt werden, bei denen der Rest $R^2$ aus der Gruppe der gesättigten, unverzweigten oder verzweigten, substituierten oder unsubstituierten $C_4$- bis $C_{14}$-Alkylgruppen, insbesondere $C_4$- bis $C_9$-Alkygruppen, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, beispielsweise Isobutylacrylat, 2-Ethylhexylacrylat, 2-Ethylhexylmethacrylat, Isooctylacrylat, Isooctylmethacrylat sowie Cyclohexylmethacrylat, Isobornylacrylat, Isobomylmethacrylat oder 3,5-Dimethyladamantylacrylat.

Die Eigenschaften der Polyacrylatkomponente wird überwiegend durch die Auswahl der Monomere und das erzielte Molekulargewicht bestimmt. Die wichtigsten Monomere sind n-Butylacrylat, 2-Ethylhexylacrylat und Acrylsäure. Geeignete Monomerbausteine sind beschrieben in "Acrylic Adhesives", Donatas Satas in Handbook of Pressure Sensitive Adhesive Technology, Second Edition, edited by Donatas Satas, Van Nostrand Reinhold New York, Seiten 396 bis 456.

Verwendete Polyacrylatkomponenten enthalten insbesondere [jeweils Gew.-%]

0 bis 20 % Acrylsäure-Einheiten
0 bis 100 % n-Butylacrylat-Einheiten
0 bis 100 % 2-Ethylhexylacrylat-Einheiten.

In einer bevorzugten Ausführung werden Polyacrylatkomponenten mit 0,5 bis 12 Gew.-% Acrylsäure-Einheiten verwendet. In einer weiteren bevorzugten Ausführung werden Polyacrylatkomponenten mit 0,5 bis 3 Gew.% Acrylsäure-Einheiten und 99,5 bis 90 Gew.-%, besonders bevorzugt 99,5 bis 96 Gew.-%, n-Butylacrylat-Einheiten verwendet. Ein weiteres Beispiel für erfindungsgemäße Polyacrylatkomponenten sind Polyacrylatkomponenten mit 80 bis 90 Gew.-%

2-Ethylhexylacrylat-Einheiten und 8 bis 20 Gew.-% n-Butylacrylat-Einheiten.

Die Polyacrylatkomponenten können zusätzlich weitere Monomer-Einheiten enthalten, durch die beispielsweise die Glasübergangstemperatur und die Vernetzbarkeit gesteuert werden kann. Beispiele sind Methylacrylat, Ethylacrylat, Methylethylacrylat, Maleinsäureanhydrid, Acrylamid, Glycidylmethacrylat, Isopropylacrylat, n-Propylacrylat, Isobutylacrylat, n-Octylacrylat sowie die entsprechenden Methacrylate dieser Acrylate. Die Polyacrylatkomponenten enthalten üblicherweise 0 bis 10 Gew.-% dieser zusätzlichen Monomereinheiten, entweder werden ausschließlich eine zusätzliche Monomereinheit oder Mischungen derselben verwendet.

Die erzielte Glasübergangstemperatur hängt von den eingesetzten Monomeren ab. Die für die erfindungsgemäßen Klebemassen verwendeten Polyacrylatkomponenten weisen im getrockneten Zustand Glasübergangstemperaturen insbesondere zwischen -80 °C und -15 °C, bevorzugt zwischen -75 °C und -25 °C und besonders bevorzugt zwischen - 55 °C und -35 °C auf.

Der Feststoffgehalt der Polyacrylatkomponenten liegt insbesondere zwischen 30 und 70 Gew.-%, bevorzugt zwischen 45 und 60 Gew.-%. Beispielhaft seien die Polyacrylatkomponenten Primal PS 83d, Primal PS 90 der Firma Rohm & Haas genannt.

Falls erwünscht, kann die Polyacrylatkomponente weitere Zusätze enthalten. Geeignete Vernetzungsmittel können Epoxydharze, Aminderivate wie beispielsweise Hexamethoxymethylmelamin und/ oder Kondensationsprodukte von einem Amin, zum Beispiel Melamin, Harnstoff mit einem Aldehyd, zum Beispiel Formaldehyd sein. Um nicht klebende Polyacrylatkomponenten zu erhalten, hat sich gezeigt, dass es günstig ist weitere Stoffe gegebenenfalls zuzugeben, die zum Beispiel mit den Carboxylgruppen des Polymers reagieren. Beispiele dafür sind Aziridine, wie Ethylenimin, Propylenimin.

Eine vorteilhafte Weiterentwicklung verwendet eine Polyacrylatkomponente,

- die durch eine radikalische Polymerisation erhältlich ist,
- die zu mindestens 65 Gew.-% auf zumindest einem acrylischen Monomer aus der Gruppe der Verbindungen der folgenden allgemeinen Formel basiert:

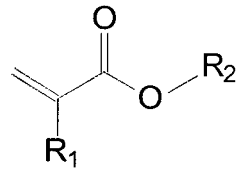

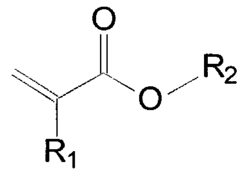

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 2 bis 20, bevorzugt mit 4 bis 9 Kohlenstoffatomen,
bei der das mittlere Molekulargewicht der Polyacrylatkomponente mindestens 650.000 beträgt,
und die, sofern sie auf einen Träger aufgetragen ist, eine Vorzugsrichtung besitzt, wobei der in Vorzugsrichtung gemessene Brechungsindex $n_{MD}$ größer ist als der in einer Richtung senkrecht zur Vorzugsrichtung gemessene Brechungsindex $n_{CD}$, und wobei die Differenz $\Delta n = n_{MD} - n_{CD}$ mindestens $1x10^{-5}$ beträgt.

Als nicht ausschließliche Beispiele für Alkylgruppe, die für den Rest $R_2$ in bevorzugter Weise Anwendung finden können, seien im folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

Weiterhin ist eine Polyacrylatkomponente vorteilhaft, die zu bis zu 35 Gew.-% auf Comonomeren in Form von Vinylverbindungen basiert, insbesondere auf eine oder mehrere Vinylverbindungen gewählt aus der folgenden Gruppe:

Vinylester, Vinylhalogenide, Vinylidenhalogenide, Nitrile ethylenisch ungesättigter Kohlenwasserstoffe.

Im Sinne der Erfindung fallen auch Acrylverbindungen mit funktionellen Gruppen unter die Bezeichnung "Vinylverbindung". Solche funktionelle Gruppen enthaltenden Vinylverbindungen sind Maleinsäureanhydrid, Styrol, Styrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren; die vorstehende Aufzählung ist nur beispielhaft und nicht abschließend.

Für die Polyacrylatkomponenten ist es besonders vorteilhaft, wenn die Zusammensetzung der entsprechenden Monomere derart gewählt wird, dass die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur der Polyacrylatkomponente zum Beispiel unterhalb 25°C liegen.

Die für die Erfindung herangezogenen Polyacrylatkomponenten werden bevorzugt durch eine radikalisch initiierte Polymerisation hergestellt.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur- zwischen sechs und 48 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als so genannte Polymerisationsregler können beispielsweise Alkohole und Ether verwendet werden. Das Molekulargewicht der Acrylathaftklebemassen liegt vorteilhaft zwischen 650.000 und 2.000.000 g/mol, mehr bevorzugt zwischen 700.000 und 1.000.000 g/mol.

In einer weiteren Vorgehensweise wird die Polymerisation in Polymerisationsreaktoren durchgeführt, die im allgemeinen mit einem Rührer, mehreren Zulaufgefäßen, Rückflusskühler, Heizung und Kühlung versehen sind und für das Arbeiten unter $N_2$-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150 °C durchgeführt wird.

In einer weiteren bevorzugten Ausführungsform kommt als Polyacrylatkomponente ein Polyacrylatcopolymer (im Folgenden einfach als "Polyacrylat" bezeichnet) auf Basis von Acrylsäureestern und/oder Methacrylsäureestern zum Einsatz, wobei zumindest ein Teil der Acrylsäureester und/oder Methacrylsäureester primäre Hydroxygruppen enthält. Der Anteil der primäre Hydroxygruppen enthaltenden Acryl- und/oder Methacrylsäureester beträgt in bevorzugter Vorgehensweise bis zu 25 Gew.-%, bezogen auf das Polyacrylat ohne organische Füllstoffe. Es kann außerdem von Vorteil sein, wenn das Polyacrylat zum Teil einpolymerisierte Acrylsäure aufweist.

Es wird insbesondere vorzugsweise ein Polyacrylat eingesetzt, welches auf die folgende Eduktmischung, enthaltend Monomere der folgenden Zusammensetzung, zurückgeführt werden kann:

a1)Acrylsäureester und/oder Methacrylsäureester der folgenden Formel $CH_2 = C(R^I)(COOR^{II})$
wobei $R^I$ = H oder $CH_3$ und $R^{II}$ eine Alkylkette mit 1 bis 20 C-Atomen ist, mit einem Anteil von 65 - 99 Gew.-%,
a2)Acrylate und/oder Methacrylate, deren Alkoholkomponente zumindest eine primäre Hydroxyl-Gruppe enthält, und/oder mit Acrylaten copolymerisierbare Vinylverbindungen, die zumindest eine primäre Hydroxyl-Gruppe enthalten, mit einem Anteil von 1 bis 20 Gew.-%,
a3) und, sofern sich die Anteile von a1) und a2) nicht zu 100 Gew.-% addieren, olefinisch ungesättigte Monomere mit funktionellen Gruppen, mit einem Anteil von 0 bis 15 Gew.-%.

Die Monomere werden bevorzugt dermaßen gewählt, dass die resultierenden Polymere bei Raumtemperatur als Haftklebemassen eingesetzt werden können, insbesondere derart, dass die resultierenden Polymere haftklebrige Eigenschaften entsprechend des "Handbook of Pressure Sensitive Adhesive Technology" von Donatas Satas (van Nostrand, New York 1989, Seite 444 - 514) besitzen.

Die Monomere werden bevorzugt dermaßen gewählt, dass die resultierenden Polymere eine Glasübergangstemperatur von $T_G \leq 25$ °C aufweisen, im Sinne einer dynamischen Glasübergangstemperatur für amorphe Systeme und der Schmelztemperatur für semi-kristalline Systeme verstanden, die durch dynamisch mechanische Analyse (DMA) bei geringen Frequenzen bestimmt werden können.

Zur Erzielung einer für Haftklebemassen bevorzugten Glasübergangstemperatur $T_G$ der Polymere von $T_G \leq$ 25 °C werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) in Analogie zur Fox-Gleichung (vgl. T.G. Fox, Bull. Am. Phys. Soc. 1 (1956) 123) der gewünschte $T_G$-Wert für das

Polymer ergibt.

(G1)

$$\frac{1}{T_G} = \sum_n \frac{w_n}{T_{G,n}}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Besonders bevorzugter Weise werden für a1) Acryl- oder Methacrylmomonere eingesetzt, die aus Acryl- und Methacrylsäureester mit Alkylgruppen aus 1 bis 20 C-Atomen bestehen und bevorzugt 4 bis 9 C-Atomen umfassen. Spezifische Beispiele, ohne sich durch diese Aufzählung einschränken zu wollen, sind Methacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat. Weitere einzusetzende Verbindungsklassen für a1) sind monofunktionelle Acrylate bzw. Methacrylate von überbrückten Cycloalkylalkoholen, bestehend aus zumindest 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer sehr bevorzugten Vorgehensweise werden für a2) Monomere eingesetzt, die Hydroxylgruppen, sehr bevorzugt primäre Hydroxylgruppen enthalten. Beispiel für a2) sind Hydroxyethylacrylat, Hydroxyethylmethacrylat, Hydroxypropylacrylat, Hydroxypropylmethacrylat, 6-Hydroxyhexylmethacrylat, 4-Hydroxystyrol, Alylalkohol wobei diese Aufzählung nicht abschließend ist.

Monomere für a3) sind z.B. olefinisch ungesättigte Monomere mit funktionellen Gruppen wie Carboxylsäuregruppen, Säureanhydridgruppen, Phosphonsäuregruppen, Amid- oder Imid- oder Aminogruppen, Isocyanatgruppen, Epoxygruppen oder Thiolgruppen.

Spezielle Beispiele für a3) sind Acrylsäure oder Methacrylsäure, Maleinsäureanhydrid, Itaconsäureanhydrid, Itaconsäure, Glyceridylmethacrylat, Glycerylmethacrylat, Vinylessigsäure, β-Acryloyloxypropionsäure, Trichloracrylsäure, Fumarsäure, Crotonsäure, Aconitsäure, Acrylonitril Dimethylacrylsäure, N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Besonders geeignet sind die Polyacrylate, wenn sie durch Bulk-, Lösungs- oder Emulsionspolymerisation hergestellt werden und gegebenenfalls anschließend, insbesondere falls sie flüchtige Bestandteile einhalten, aufkonzentriert werden.

Die Polyacrylate haben in einer bevorzugten Vorgehensweise ein gewichtsmittleres Molekulargewicht $M_w$ von mindestens 300.000 g/mol bis maximal 1.500.000 g/mol. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS). Die Polyacrylate enthalten mindestens ein Comonomer, welches eine oder mehrere primäre Hydroxygruppen enthält. Es kann notwendig sein, die Polymerisation in Gegenwart von Polymerisationsreglern wie Thiolen, Halogenverbindungen und insbesondere Alkoholen (Isopropanol) durchzuführen, um das gewünschte ein gewichtsmittlere Molekulargewicht $M_w$ einzustellen.

Besonders geeignet sind auch Polyacrylate, die eine enge Molekulargewichtsverteilung (Polydispersität < 4) haben. Diese Massen sind bei relativ niedrigem Molekulargewicht nach dem Vernetzen besonders scherfest. Da im Vergleich zu einem normal verteilten Polyacrylat bei einem eng verteilten bei gleichem Kohäsionsniveau ein niedrigeres Molekulargewicht erforderlich ist, reduzieren sich Viskosität und Prozesstemperaturen. Somit ermöglicht ein eng verteiltes Polyacrylate eine besonders lange Verarbeitungszeit.

Eng verteilte Polyacrylate können durch anionische Polymerisation oder durch kontrollierte radikalische Polymerisationsmethoden hergestellt werden, wobei letzteres besonders gut geeignet ist. Beispiele sind in US 6,765,078 B2 und DE 10036901 A1 bzw. US 2004/0092685 A1 beschrieben. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der AT R P sind ferner in den Schriften US 5,945,491 A, US 5,854,364 A und US 5,789,487 A beschrieben.

Optional kann es von Vorteil sein, die thermisch vernetzte Schicht strahlenchemisch nachzuvernetzen. Besonders geeignet ist dazu die Elektronenstrahlvernetzung.

Für die erfindungsgemäßen Klebemassen kann es sehr vorteilhaft sein, wenn diese harzfrei vorliegen. Optional zur Kontrolle und Einstellung bestimmter klebtechnischer Eigenschaften und als Phasenvermittler können dem Compound weiterhin Harze zugemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$-, $C_9$- sowie andere Kohlenwasserstoffharze. Beliebige Kombinationen dieser und weiterer Harze können eingesetzt werden, um die Eigenschaften der resultierenden Klebmasse wunschgemäß einzustellen. Besonders vorteilhaft lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Ein bevorzugtes Terpenphenolharze ist beispielsweise Dertophene T 110, ein bevorzugtes hydriertes Kolophoniumderivat Foral 85.

Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Polymer kompatiblen (löslichen) Harze einsetzen. Auf die Darstellung des Wissensstandes im "Handbook of Pressure Sensitive Adhesive Technology" von Donatas Satas (van Nostrand, 1989) sei ausdrücklich hingewiesen.

Die erfindungsgemäße Klebemasse kann neben Naturkautschuk, der Polyacrylatkomponente und der Klebharzkomponente auch weitere Zusatzstoffe aufweisen wie zum Beispiel Weichmacher (Plastifizierungsmittel, *z.B. nisdermolekulare Polyacrylate, Phthalate, wasserlösliche Weichmacher, Weichharze, Phosphafe oder Polyphosphate*), Vernetzer, Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Pigmente, rheologische Additive, Additive zur Verbesserung der Haftung, Elastomere, Compoundierungsmittel, Alterungsschutzmittel, z. B. in Form von primären und sekundären Antioxidantien oder in Form von Lichtschutzmitteln, UV-Absorber sowie sonstige Hilfs- und Zusatzstoffe, beispielsweise Trockenmittel (etwa Molekularsieb-Zeolithe, oder Calciumoxid), Fließ- und Verlaufmittel und/oder Benetzer wie Tenside oder Katalysatoren.

Sehr bevorzugt können verschiedene Kreideformen als weiterer Füllstoff eingesetzt werden, wobei besonders bevorzugt Mikrosöhl-Kreide (Fa. Söhlde) eingesetzt wird. Bei bevorzugten Anteilen bis zu 30 Gew.-% verändern sich die klebtechnischen Eigenschaften (Sofortklebkraft auf Stahl) durch den Füllstoffzusatz nicht entscheidend und führen zum Teil überraschenderweise sogar zu Verbesserungen (Scherfestigkeit bei Raumtemperatur).

Weiterhin können schwerentflammbare Füllstoffe, wie beispielsweise Ammoniumpolyphosphat, weiterhin elektrisch leitfähige Füllstoffe, wie beispielsweise Leitruß, Kohlenstofffasem und/oder silberbeschichtete Kugeln, weiterhin ferromagnetische Additive, wie beispielsweise Eisen-(III)-oxide, weiterhin Additive zur Herstellung geschäumter Schichten, wie beispielsweise Blähmittel, Glasvollkugeln, Glashohlkugeln, expandierbare Microballons, Alterungsschutzmitteln, Lichtschutzmitteln, Ozonschutzmitteln vor oder nach der Aufkonzentration des Polyacrylats zugegeben oder eincompoundiert werden.

Vorteilhafterweise enthält die erfindungsgemäße Klebemasse

x Gew.% Naturkautschuk,
y Gew.-% mindestens einer Polyacrylatkomponente,
v Gew.-% mindestens einer Klebharzkomponente und
w Gew.-% Additive, wobei
$10 \leq x \leq 80$,
$10 \leq y < 95$,
$0 \leq v \leq 50$,
$0 \leq w \leq 10$ und
$x+y+v+w=100$.

Solche Verbindungen weisen eine gute Kohäsion bei gleichzeitiger guter Alterungs- und Witterungsbeständigkeit auf.

Besonders bevorzugt enthält die erfindungsgemäße Klebemasse zwischen 10 und 60 Gew.-%, vorzugsweise zwischen 20 und 50 Gew.-% Naturkautschuk und zwischen 40 und 90 Gew.-%, vorzugsweise zwischen 50 und 80 Gew.% der Polyacrylatkomponente. Dabei können noch Klebharzkomponenten und weitere Additive zugesetzt sein, besonders bevorzugt sind jedoch Verbindungen, die neben Naturkautschuk und der Polyacrylatkomponente keine weiteren Komponenten enthalten. Bei derartigen Verbindungen wird ein Optimum erreicht, was die Verbesserung im Alterungsverhalten im Vergleich zu Kautschukmassen und die Verbesserung in der Kohäsion gegenüber Acrylaten betrifft.

Die erfindungsgemäßen Haftklebemassen werden nach einem Verfahren hergestellt, das die folgenden Schritte

umfasst:

(a) Bereitstellen des Naturkautschuks, der Polyacrylatkomponente und gegebenenfalls der Klebharzkomponente sowie der Additive; und

(b) Mischen der in Schritt (a) bereitgestellten Komponenten in einem Extruder unter Erhalt eines homogenen Gemisches.

Als geeigneter Extruder kommt z. B. ein Planetwalzenextruder oder ein Doppelschneckenextruder zum Einsatz. Bevorzugt sind eine Extrudertemperatur von mehr als 130 °C, besonders bevorzugt 130 °C, und eine Drehzahl des Extruders im Misch- bzw. Förderbetrieb von mehr als 50 Umdrehungen/min, besonders bevorzugt 75 bis 100 Umdrehungen/min. Zweckmäßigerweise wird ein Temperaturprofil gewählt, das für die Verarbeitung der unter Schritt (a) bereitgestellten Komponenten dafür geeignet ist, das unter Schritt (b) genannte Mischen der Komponenten optimal zu erfüllen, sowie das in der schwach ammoniakalischen Acrylat-Copolymer-Dispersion enthaltene Wasser effektiv zu entfernen.

Vorzugsweise ist das Temperaturprofil dergestalt, dass der Naturkautschuk in der ersten Mischzone ggf. mit einem Teil des Harzes bei Mischungstemperaturen von 120- 190°C homogen gemischt wird. Am Anfang der zweiten Mischzone wird das Acrylat als Dispersion hinzu gegeben, wobei sich durch die Verdampfungskälte des Wassers die Temperatur der Mischung auf 120-140°C reduziert. Das gasförmige Wasser wird durch geeignete Aggregate, wie beispielsweise einem Vakuumdom, entzogen. Am Ende des Extruders wird eine trockene Klebmasse mit einer Temperatur von 130°C entnommen. Durch das Mischen der Komponenten in einem geeignetem Mischaggregat, z.B. einem Planetwalzenextruder, (Schritt b)) können Gemische (im Folgenden als "Blends" bezeichnet) aus Polyacrylaten und Naturkautschuk in nahezu allen Mischungsverhältnissen homogen hergestellt werden. Diese Blends können dann in einem weiteren Schritt mittels eines Walzenauftragwerkes zu einer haftklebrigen Schicht ausgeformt werden. Dazu wird das Gemisch zweckmäßigerweise mit Schichtdicken von 15 bis 200 g/m$^2$, bevorzugt 50 g/m$^2$, auf einen Träger, vorzugsweise Papier oder eine Folie, aufgebracht.

Das Gemisch wird vorzugsweise einer Elektronenstrahlhärtung (ESH) unterzogen, wodurch eine Vernetzung eintritt. Dieser Verfahrensschritt wird zweckmäßigerweise im Anschluss an das Ausformen des Gemisches durchgeführt.

Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Die Elektronenstrahlhärtung bewirkt eine Vernetzung der erfindungsgemäßen Haftklebemasse. Damit wird eine deutliche Verbesserung der Temperaturbeständigkeit der erfindungsgemäßen Haftklebemasse erreicht, wie Kurzzeittemperaturbeständigkeitstests gezeigt haben. Diese wird geprüft mittels des Shear Adhesion Failure Temperature - Test (kurz: SAFT / tesa - Prüfmethode Ident-Nr. JOPMA 0013)

Schließlich betrifft die Erfindung die Verwendung der vorstehend beschriebenen Klebemassen für ein ein- oder doppelseitiges Klebeband, bestehend aus zumindest einem Träger und einer Schicht einer Haftklebemasse.

Als Trägermaterialien für die erfindungsgemäße Haftklebemasse, beispielsweise für Klebebänder, werden die dem Fachmann geläufigen und üblichen Materialien, wie Folien (Polyester, PET, PE, PP, BOPP, PVC, Polyimid, Celluloseacetat), Vliese, Schäume, Gewebe und Gewebefolien sowie Trennpapier (Glassine, HDPE, LDPE) verwendet. In einer weiteren Ausführungsform werden mit der Haftklebemasse Maskierungsbänder hergestellt. Diese Aufzählung ist nicht abschließend.

Die Erfindung wird nachstehend anhand von Beispielen ausführlicher erläutert. Die Ergebnisse sind in den beigefügten Diagrammen veranschaulicht.

## Prüfmethoden

### Schälfestigkeit (Klebkraft KK)

Die Prüfung der Schälfestigkeit (Klebkraft) erfolgt wie nachfolgend beschrieben:

Ein Streifen des zu untersuchenden (Selbst)klebebandes wird in definierter Breite (Standard: 20 mm) auf einer geschliffenen Stahlplatte beziehungsweise auf einem anderen gewünschten Haft-/Prüfuntergrund wie zum Beispiel Polyethylen, Polycarbonat oder Glas usw. durch zehnmaliges Überrollen mittels einer 5 kg Stahlrolle verklebt. Doppelseitig klebende Klebebänder werden mit einer 36 $\mu$m dicken Hart-PVC-Folie rückseitig verstärkt. Die so präparierte

Platte wird in das Prüfgerät eingespannt, der Klebestreifen über sein freies Ende an einer Zugprüfmaschine unter einem Schälwinkel von 180° mit einer Geschwindigkeit von 300 mm/min abgezogen, und die dafür notwendige Kraft ermittelt. Es besteht auch die Möglichkeit, die so präparierten Platten erst im Anschluss einer vorangegangenen Lagerungszeit, wie z.B. nach 14 Tagen bei Raumtemperatur oder nach 7 Tagen unter UV-Bestrahlung zu vermessen. Die Messergebnisse sind in N/cm angegeben und über drei bis fünf Messungen gemittelt. Die Messungen werden standardmäßig in einem klimatisierten Raum bei 23 °C und 50 % relativer Luftfeuchte oder bei möglichen Anwendungsbedingungen, wie z.B. bei 5°C in einer dafür vorgesehenen Klimakammer durchgeführt.

**Quantitative Ermittlung der Scherfestigkeit: Statischer Schertest (SSZ)**

Ein Klebeband wird auf einen vorgegebenen, starren Haftuntergrund (hier Stahl) aufgebracht und einer konstanten Scherbelastung ausgesetzt. Ermittelt wird die Haltedauer in Minuten. Durch eine geeignete Plattenaufhängung (Winkel 179 ± 1°) wird sichergestellt, dass sich das Klebeband nicht von der Unterkante der Platte abschält.

In erster Linie soll die Prüfung eine Aussage über die Kohäsivität der Masse liefern. Dies ist aber nur dann der Fall, wenn die Parameter Gewicht und Temperatur so gewählt werden, dass es bei der Prüfung tatsächlich zu Kohäsionsversagen kommt. Weiterhin gibt der Test Aufschluss über die Adhäsion zum Haftgrund oder über eine Kombination aus Adhäsion und Kohäsivität der Masse.

Ein 13 mm breiter Streifen des zu prüfenden Klebebandes wird auf einem polierten Stahlplättchen (Prüfuntergrund) auf einer Länge von 5 cm mit einer 2 kg-Rolle durch 10 maliges Überrollen verklebt. Doppelseitig klebende Klebebänder werden auf der Rückseite mit einer 50 μm starken Aluminiumfolie abgedeckt und somit verstärkt. Anschließend wird eine Gurtschlaufe an das untere Ende des Klebebandes angebracht. Sodann wird mit Schraube und Mutter ein Adapterplättchen auf der Vorderseite der Schertestplatte befestigt, um den vorgegebenen Winkel von 179 ± 1° zu gewährleisten. Die Aufziehzeit zwischen Anrollen und Belastung soll zwischen 10 und 15 Minuten liegen. Die Gewichte werden anschließend ruckfrei mit Hilfe der Gurtschlaufe angehängt. Eine automatische Zähleruhr ermittelt nun den Zeitpunkt des Abscherens der Prüfmuster.

**Kurzzeittemperaturbeständigkeit (SAFT)**

SAFT (Shear Adhesion Failure Temperature) ist eine Schnellprüfung der Kurzzeittemperaturbeständigkeit von Klebebändern bei ansteigender Temperatur.

Ein Klebeband, zugeschnitten auf 10mm Breite und mit einer 5mm breiten Verstärkung auf der Rückseite versehen, wird auf eine temperierbare Stahlplatte geklebt und mit einer 2kg Stahlrolle mit einer Geschwindigkeit von 10m/min 3x hin und her überrollt. Der so verklebte Teststreifen und die Verstärkung werden an der Oberkante auf gleiche Länge geschnitten, damit der Tastfühler während der Messung die Scherstrecke in μm aufnehmen kann. Die präparierte Probe wird mit einem vorgegebenen Gewicht von 50g auf Scherung belastet. Während des Tests werden Scherstrecke in μm und Temperatur in °C aufgezeichnet. Die Verklebungsfläche wird, beginnend bei 30°C, mit einer Rate von 9°C/min auf 200°C aufgeheizt. Die Messung ist bei Erreichen der vorgegebenen Endtemperatur 200°C oder bei Erreichen einer Rutschstrecke von 1000μm beendet.

**Rohstoffliste**

Folgende Rohstoffe wurden in den nachstehend beschriebenen Beispielen verwendet:

Tabelle 1: Rohstoffliste

| Handelsname | Rohstoff/ IUPAC | Hersteller/ Lieferant |
|---|---|---|
| Kautschuk SVR 3L | Naturkautschuk (NR) | Kautschukgesellschaft mbH |
| Primal PS 83.D | Polyacrylat (Ac) | Rhom & Haas |
| Piccotac 1100-E | aliphatische Kohlenwasserstoffharz | Eastman Chemical Middelburg B.V. |
| Dertophene T 110 | Terpenphenolharz | DRT (Willers & Engel) |

**Rezepturen**

Nachstehende Massesysteme wurden nach dem beschriebenen Verfahren hergestellt und in den nachfolgenden Beispielen näher erläutert bzw. mittels der genannten Prüfmethoden ausgewertet:

Tabelle 2: Verwendete Rezepturen

| **Rezeptur** | **NR** [Gew.-%] | **Ac** [Gew.-%] | **Piccotac 1100-E** [Gew.-%] | **Dertophene T 110** [Gew.-%] |
|---|---|---|---|---|
| **A** | 0 | 100 | | |
| **B** | 19 | 81 | | |
| **C** | 33 | 67 | | |
| **D** | 46 | 54 | | |
| **E** | 57 | 43 | | |
| **F** | 67 | 33 | | |
| **G** | 75 | 25 | | |
| **H** | 50 | | 50 | |
| **I** | 23 | 47 | | 29 |
| **J** | 42 | 32 | | 26 |
| **K** | 58 | 19 | | 24 |
| **L** | 70 | 9 | | 22 |
| **M** | 20 | 80 | | |
| **N** | 50 | 50 | | |

Die nach den oben stehenden Rezepturen hergestellten Selbstklebemassen wurden jeweils mit einem Masseauftrag von 50g/m$^2$ auf einen 23$\mu$m dicken PET-Träger (Kemafoil HPH100, Coveme) beschichtet.

**Beispiel 1**

Die Selbstklebemassen nach den Rezepturen A bis G wurden nach dem beschriebenen Verfahren compoundiert, bahnförmig ausgeformt und anschließend mit jeweils 50g/m$^2$ auf den genannten 23$\mu$m dicken PET-Träger beschichtet.

Von den hergestellten Mustern wurden jeweils die Klebkraft auf Stahl nach sofortiger Messung, also ohne Lagerung, und zusätzlich nach einer Vernetzung durch Elektronenbestrahlung (ESH) mit einer Dosis von 160kV und 50kGy, ermittelt.

Tabelle 3: Auswertung Beispiel 1

| | **Klebkraftauf Stahl** | |
|---|---|---|
| **Rezeptur** | **sofort** [N/cm] | **nach ESH** [N/cm] |
| **A** | 5,0 | 2,1 |
| **B** | 4,1 | 1,8 |
| **C** | 4,0 | 1,7 |
| **D** | 3,7 | 1,6 |
| **E** | 2,9 | 1,4 |
| **F** | 2,5 | 1,2 |
| **G** | 1,9 | 0,7 |

Polyacrylate zeigen in ihrer Klebkraft eine deutliche Abhängigkeit von der ESH-Vernetzung. Im Beispiel (Diagramm 1) fällt die Klebkraft von 5,0 N/cm im unvernetzten Zustand auf 2,2 N/cm nach ESH-Vernetzung. Im Vergleich dazu reagieren Massen auf Kautschukbasis darauf nahezu gar nicht. Diese Tendenzen zeigen sich dann auch in Gemischen: Je höher der Anteil an Acrylat, desto größer fällt der Klebkraft-Unterschied aus und umgekehrt - mit steigendem Gehalt an Kautschuk nimmt die Abhängigkeit der Klebkraft von der ESH ab. Mit Anteilen an Naturkautschuk lässt sich demnach der starke Einfluss der Polyacrylate von der ESH kontrollieren.

**Beispiel 2**

Eine Standardmasse auf Basis von Naturkautschuk ohne Antioxidantien (Rezeptur H) wurde nach dem beschriebenen Verfahren hergestellt, bahnförmig ausgeformt und mit einem Masseauftrag von 50 g/m$^2$ auf eine PET-Folie 23$\mu$m beschichtet und anschließend mit ausgewählten Mustern aus dem Beispiel 1 hinsichtlich der Verklebungsfestigkeit nach unterschiedlichen Lagerungsbedingungen verglichen.

In Tabelle 4 sind die ermittelten Verklebungsfestigkeiten dargestellt und mit denen der Rezepturen A, B, D und G, also in Abhängigkeit des Acrylat-Gehaltes, verglichen.

Tabelle 4: Auswertung Beispiel 2

| | **Klebkraft auf Stahl** | | |
|---|---|---|---|
| **Rezeptur** | **RT sofort** [N/cm] | **5°C** [N/cm] | **nach 14d RT** [N/cm] |
| **A** | 5,0 | 4,1 | 8,8 |
| **B** | 4,1 | 3,3 | 4 |
| **D** | 3,7 | 3 | 2,3 |
| **G** | 1,9 | 2,1 | 0,8 |
| **H** | 3,5 | 1,8 | 3,8 |

In Tabelle 4 sowie in Diagramm 2 sind weitere klebtechnische Ergebnisse von NR/Ac-Blends mit 81, 54 und 25%-igem Gehalt an Acrylat im Vergleich zum Reinacrylat und einer Masse auf Naturkautschukbasis dargestellt. Es sind entsprechende KK-Prüfungen bei Raumtemperatur (23°C) und 5°C sowie nach 14-tägigem Aufziehen auf Stahl gezeigt. Die Tieftemperaturmuster werden sowohl bei 5°C verklebt (und nach Vorschrift überrollt) als auch gemessen.

Es kann gezeigt werden, dass mit bestimmten Mischungsverhältnissen auch ohne eine Zumischung von Harz Klebkräfte erzielt werden können, wie sie beispielsweise im Bereich der Anwendungen von Maskierungsbändern durchaus üblich sind. Das Reinacrylat verliert bei tiefen Temperaturen an Klebkraft und zeigt nach einem 14-tätigen Aufziehen bei Raumtemperatur noch einen enormen Anstieg um 3,8 N/cm. Dies ist für Acrylate jedoch durchaus üblich und wird im Vergleich dazu bei Naturkautschukmassen nicht in solchem Maß beobachtet. Auch Naturkautschukmassen verlieren aufgrund ihres verhältnismäßig hohen Tg's um etwa 0°C bei Applikation in der Kälte an Klebkraft. Demgegenüber zeigen die Mischungen aus Naturkautschuk und Acrylat im betrachteten Bereich sehr ausgewogene Klebkräfte, die nur etwa um eine Differenz von 0,5 N/cm schwanken.

**Beispiel 3**

Tabelle 5: Auswertung Beispiel 3

| | **Klebkraft auf Glas** | | |
|---|---|---|---|
| **Rezeptur** | RT sofort [N/cm] | nach 1 Wo UV [N/cm] | $\Delta$ **Klebkraft** |
| **H** | 6,3 | 4,3 | 2,0 |
| **G** | 0,4 | 1,8 | -1,4 |
| **F** | 0,8 | 2,0 | -1,2 |
| **C** | 1,3 | 2,4 | -1,1 |
| **A** | 1,4 | 2,5 | -1,1 |

Die Alterungs- und Witterungsbeständigkeit der erfindungsgemäßen Blends kann ebenfalls als signifikantes, neues Eigenschaftsmerkmal gesehen werden. Wird im Vergleich eine Naturkautschuk-Standardmasse (Rezeptur H) ohne Antioxidans herangezogen, zeigt diese einen für Kautschukmassen üblichen Klebkraftverlust nach einer einwöchigen Lagerung unter einer Sonnenlichtlampe (vgl. Tabelle 5 bzw. Diagramm 3).

Hier sollten lediglich Tendenzen und nicht Absolutwerte der Klebkraft betrachtet werden. Die Blends sind nicht harzabgemischt und ESH-vernetzt und zeigen deshalb deutlich niedrigere Klebkraft als die Naturkautschukmasse.

Die erfindungsgemäßen Blends aus Naturkautschuk und Polyacrylaten weisen hier eher die Tendenz der Acrylate zum Aufziehen auf. Sämtliche untersuchte Blends steigen in ihren Klebkräften um mehr als 1 N/cm. Interessant ist auch, dass im Vergleich zum Reinacrylat Gehalte von ca. 20 % Kautschuk im Compound offensichtlich keinen Effekt auf Klebkraft und Alterung haben. Erst ab Gehalten von etwa 50% Naturkautschuk verändern sich Kleb- und Alterungseigenschaften.

**Beispiel 4**

Tabelle 6: Auswertung Beispiel 4

| **Rezeptur** | **SSZ RT** [min] | **SSZ RT nach ESH** [min] |
|---|---|---|
| **A** | 10 | |
| **B** | 20 | |
| **C** | 15 | |
| **D** | 15 | |
| **E** | 10 | |
| **F** | 15 | |
| **G** | 10 | |
| **I** | 40 | 360 |
| **J** | 60 | 450 |
| **K** | 240 | 650 |
| **L** | 170 | 4100 |

Mittels DSC kann gezeigt werden, dass auch makroskopisch bzw. optisch homogene NR/Ac-Blends zwei separate Glasübergangspunkte aufweisen - es liegt demnach mikroskopisch ein Zweiphasensystem vor. Diese Zweiphasigkeit erklärt vermutlich auch die geringen Scherstandszeiten SSZ von unvernetzten NR/Ac-Compounds. Diese lassen sich durch ESH-Vernetzung verbessern, wobei hier schon eine deutliche Abhängigkeit vom NR/Ac-Verhältnis erkennbar wird (vgl. Tabelle 6 und Diagramm 4). Je höher der Naturkautschukgehalt im Blend, desto höher ist auch die entsprechende SSZ. Noch deutlicher zeigt sich diese Tendenz bei harzabgemischten Blends, wenn ein Harz ausgewählt wird, dass für beide Polymersysteme gleichermaßen geeignet ist. Die Lösung des Harzes in Naturkautschuk und Acrylat lässt sich dann auch in der DSC verfolgen. Das Harz scheint hier als "Lösungsvermittler" zwischen beiden Phasen zu fungieren. Dies spiegelt sich letztlich an den enorm gestiegenen Scherstandszeiten wider. Auch hier lässt sich eine deutliche Abhängigkeit vom NR-Gehalt feststellen.

**Beispiel 5**

Insbesondere für Masking-Anwendungen (im Außenbereich) ist das Klebkraftniveau eines Produktes über größere Temperaturbereiche und nach längeren Zeiten (Aufziehen) interessant.

Es lässt sich zeigen, dass sich bei NR/Ac-Blends ein Optimum finden lässt, welches im Vergleich zu Kautschukmassen ein verbessertes Alterungsverhalten und im Vergleich zu Acrylaten verbesserte kohäsive Eigenschaften aufweist. Dieses ist insbesondere bei Mischungen von 80 - 50 % Polyacrylat und 20 - 50 % Naturkautschuk gegeben, siehe Tabelle 7.

Tabelle 7: Auswertung Beispiel 5

| | **Klebkraft auf Stahl** | | |
|---|---|---|---|
| **Rezeptur** | **RT sofort** [N/cm] | **5°C** [N/cm] | **nach 14d RT** [N/cm] |
| **M** | 4,0 | 3,3 | 4,0 |
| **N** | 2,5 | 3,0 | 2,3 |

## Patentansprüche

1. Druckempfindliche Klebemasse, enthaltend eine homogene Mischung aus Naturkautschuk und mindestens einer Polyacrylatkomponente.

2. Klebemasse nach Anspruch 1, **dadurch gekennzeichnet, dass** sie
x Gew--% Naturkautschuk,
y Gew.-% mindestens einer Polyacrylatkomponente,
v Gew.-% mindestens einer Klebharzkomponente und
w Gew.-% Additive
enthält, wobei
$10 \leq x \leq 80$,
$10 \leq y < 95$,
$0 \leq v \leq 50$,
$0 \leq w \leq 10$ und
$x+y+v+w=100$.

3. Klebemasse nach Anspruch 2, **dadurch gekennzeichnet, dass**
$10 \leq x \leq 60$, vorzugsweise $20 \leq x \leq 50$ und
$40 \leq y \leq 90$, vorzugsweise $50 \leq y \leq 80$.

4. Klebemasse nach Anspruch 2 oder 3, **dadurch gekennzeichnet, dass**
$v = 0$ und/oder $w = 0$.

5. Klebemasse nach einem der Ansprüche 1 bis 4, **dadurch gekennzeichnet, dass** die Polyacrylatkomponente ein Polymer aus Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, Isobutylacrylat, 2-Ethylhexylacrylat, 2-Ethylhexylmethacrylat, Isooctylacrylat, Isooctylmethacrylat sowie Cyclohexylmethacrylat, Isobornylacrylat, Isobornylmethacrylat oder 3,5-Dimethyladamantylacrylat oder ein Copolymer aus mindestens zwei dieser Acrylate ist.

6. Klebemasse nach einem der Ansprüche 2 bis 5, **dadurch gekennzeichnet, dass** die Klebharzkomponente mindestens ein aliphatischer Kohlenwasserstoffharz und/oder Terpenphenolharz ist.

7. Klebemasse nach einem der Ansprüche 2 bis 6, **dadurch gekennzeichnet, dass** das Additiv mindestens eine Verbindung, ausgewählt aus der Gruppe Weichmacher, Vernetzer, Füllstoffe, Keimbildner, Blähmittel, Pigmente, rheologische Additive, Additive zur Verbesserung der Haftung, Elastomere, Compoundierungsmittel, Alterungsschutzmittel, UV-Absorber, Trockenmittel, Fließ- und Verlaufmittel und/oder Benetzer, ist.

8. Verfahren zum Herstellen einer Verbindung nach einem der Ansprüche 1 bis 7, umfassend die Schritte:

   a) Bereitstellen des Naturkautschuks, des Acrylatpolymers oder -copolymers und gegebenenfalls der Additive und
   b) Mischen der in Schritt a) bereitgestellten Komponenten in einem Extruder unter Erhalt eines homogenen Gemisches und

   **dadurch gekennzeichnet, dass** das Verfahren bei einer Temperatur von mehr als 100°C, vorzugsweise mehr als 130°C, und einer Drehzahl des Extruders von mehr als 50 U/min, vorzugsweise 75 bis 100 U/min. durchgeführt wird.

9. Verfahren nach Anspruch 8, **dadurch gekennzeichnet, dass**

   c) das in Schritt b) erhaltene Gemisch durch Aufbringen mit einer Schichtdicke von 15 bis 200 g/m$^2$, vorzugsweise 50 g/m$^2$ auf einen Träger zu einer haftklebrigen Schicht ausgeformt wird.

10. Verfahren nach Anspruch 8 oder 9, **dadurch gekennzeichnet, dass** das Gemisch im Anschluss an Schritt c) einer Elektronenstrahlhärtung unterzogen wird.

11. Ein- oder doppelseitiges Klebeband, bestehend aus zumindest einem Träger und zumindest einer Schicht einer

Haftklebemasse nach einem der Ansprüche 1 bis 7 oder hergestellt nach einem Verfahren gemäß der Ansprüche 8 bis 10.

## Claims

1. Pressure-sensitive adhesive comprising a homogeneous mixture of natural rubber and at least one polyacrylate component.

2. Adhesive according to Claim 1, **characterized in that** it comprises
x % by weight of natural rubber,
y % by weight of at least one polyacrylate component,
v % by weight of at least one tackifying resin component, and
w % by weight of additives,
where
$10 \leq x \leq 80$,
$10 \leq y < 95$,
$0 \leq v \leq 50$,
$0 \leq w \leq 10$, and
$x+y+v+w= 100$.

3. Adhesive according to Claim 2, **characterized in that**
$10 \leq x \leq 60$, preferably $20 \leq x \leq 50$, and
$40 \leq y \leq 90$, preferably $50 \leq y \leq 80$.

4. Adhesive according to Claim 2 or 3, **characterized in that**
$v = 0$ and/or $w = 0$.

5. Adhesive according to any of Claims 1 to 4, **characterized in that** the polyacrylate component is a polymer of methyl acrylate, methyl methacrylate, ethyl acrylate, n-butyl acrylate, n-butyl methacrylate, n-pentyl acrylate, n-hexyl acrylate, n-heptyl acrylate, n-octyl acrylate, n-octyl methacrylate, n-nonyl acrylate, lauryl acrylate, stearyl acrylate, behenyl acrylate, isobutyl acrylate, 2-ethylhexyl acrylate, 2-ethylhexyl methacrylate, isooctyl acrylate, isooctyl methacrylate, and also cyclohexyl methacrylate, isobornyl acrylate, isobornyl methacrylate or 3,5-dimethyladamantyl acrylate, or a copolymer of at least two of these acrylates.

6. Adhesive according to any of Claims 2 to 5, **characterized in that** the tackifying resin component is at least one aliphatic hydrocarbon resin and/or terpene-phenolic resin.

7. Adhesive according to any of Claims 2 to 6, **characterized in that** the additive is at least one compound selected from the group of plasticizers, crosslinkers, fillers, nucleators, expandants, pigments, rheological additives, adhesion promoter additives, elastomers, compounding agents, aging inhibitors, UV absorbers, driers, flow control and leveling agents and/or wetting agents.

8. Method for producing a compound according to any of Claims 1 to 7, comprising the steps of:

   a) providing the natural rubber, the acrylate polymer or copolymer, and optionally the additives, and
   b) mixing the components provided in step a) in an extruder to give a homogeneous mixture, and

   **characterized in that** the method is carried out at a temperature of more than 100°C, preferably more than 130°C, and at an extruder speed of more than 50 rpm, preferably 75 to 100 rpm.

9. Method according to Claim 8, **characterized in that**

   c) the mixture obtained in step b) is shaped to a pressure-sensitively adhesive layer by application with a layer thickness of 15 to 200 $g/m^2$, preferably 50 $g/m^2$, to a carrier.

10. Method according to Claim 8 or 9, **characterized in that** the mixture, subsequently to step c), is subjected to an electron beam cure.

**11.** Single- or double-sided adhesive tape composed of at least one carrier and at least one layer of a pressure-sensitive adhesive according to any of Claims 1 to 7 or produced by a method according to Claims 8 to 10.

## Revendications

**1.** Masse adhésive sensible à la pression, contenant un mélange homogène de caoutchouc naturel et d'au moins un composant de type polyacrylate.

**2.** Masse adhésive selon la revendication 1, **caractérisée en ce qu'**elle contient
x % en poids de caoutchouc naturel,
y % en poids d'au moins un composé de type polyacrylate,
v % en poids d'au moins un composé de type résine adhésive et
w % en poids d'additifs, où
$10 \leq x \leq 80$,
$10 \leq y < 95$,
$0 \leq v \leq 50$,
$0 \leq w \leq 10$ et
$x + y + v + w = 100$.

**3.** Masse adhésive selon la revendication 2, **caractérisée en ce que**
$10 \leq x \leq 60$, de préférence $20 \leq x \leq 50$ et
$40 \leq y \leq 90$, de préférence $50 \leq y \leq 80$.

**4.** Masse adhésive selon la revendication 2 ou 3, **caractérisée en ce que**
$v = 0$ et/ou $w = 0$.

**5.** Masse adhésive selon l'une quelconque des revendications 1 à 4, **caractérisée en ce que** le composant de type polyacrylate est un polymère d'acrylate de méthyle, de méthacrylate de méthyle, d'acrylate d'éthyle, d'acrylate de n-butyle, de méthacrylate de n-butyle, d'acrylate de n-pentyle, d'acrylate de n-hexyle, d'acrylate de n-heptyle, d'acrylate de n-octyle, de méthacrylate de n-octyle, d'acrylate de n-nonyle, d'acrylate de lauryle, d'acrylate de stéaryle, d'acrylate de béhényle, d'acrylate d'isobutyle, d'acrylate de 2-éthylhexyle, de méthacrylate de 2-éthylhexyle, d'acrylate d'isooctyle, de méthacrylate d'isooctyle ainsi que de méthacrylate de cyclohexyle, d'acrylate d'isobornyle, de méthacrylate d'isobornyle ou d'acrylate de 3,5-diméthyladamantyle ou un copolymère d'au moins deux de ces acrylates.

**6.** Masse adhésive selon l'une quelconque des revendications 2 à 5, **caractérisée en ce que** le composant de type résine adhésive est au moins une résine hydrocarbonée aliphatique et/ou une résine de terpènephénol.

**7.** Masse adhésive selon l'une quelconque des revendications 2 à 6, **caractérisée en ce que** l'additif est au moins un composé, choisi dans le groupe formé par les plastifiants, les réticulants, les charges, les agents de formation de germes, les agents gonflants, les pigments, les additifs rhéologiques, les additifs pour améliorer l'adhérence, les élastomères, les agents de compoundage, les agents de protection contre le vieillissement, les absorbants des UV, les dessiccateurs, les agents d'écoulement et d'étalement et/ou les mouillants.

**8.** Procédé pour la préparation d'un composé selon l'une quelconque des revendications 1 à 7, comprenant les étapes de :

a) mise à disposition du caoutchouc naturel, du polymère ou copolymère d'acrylate et le cas échéant des additifs et
b) mélange des composants mis à disposition dans l'étape a) dans une extrudeuse avec obtention d'un mélange homogène et

**caractérisé en ce que** le procédé est réalisé à une température de plus de 100°C, de préférence de plus de 130°C, et à une vitesse de rotation de l'extrudeuse de plus de 50 t/min, de préférence de 75 à 100 t/min.

**9.** Procédé selon la revendication 8, **caractérisé en ce que**

c) le mélange obtenu dans l'étape b) est façonné par application, à une épaisseur de couche de 15 à 200 $g/m^2$, de préférence de 50 $g/m^2$, sur un support en une couche autoadhésive.

**10.** Procédé selon la revendication 8 ou 9, **caractérisé en ce que** le mélange est soumis à un durcissement par un rayonnement électronique après l'étape c).

**11.** Bande adhésive monoface ou double face, constituée par au moins un support et au moins une couche d'une masse autoadhésive selon l'une quelconque des revendications 1 à 7 ou produite selon un procédé selon les revendications 8 à 10.

## Zeichnungen

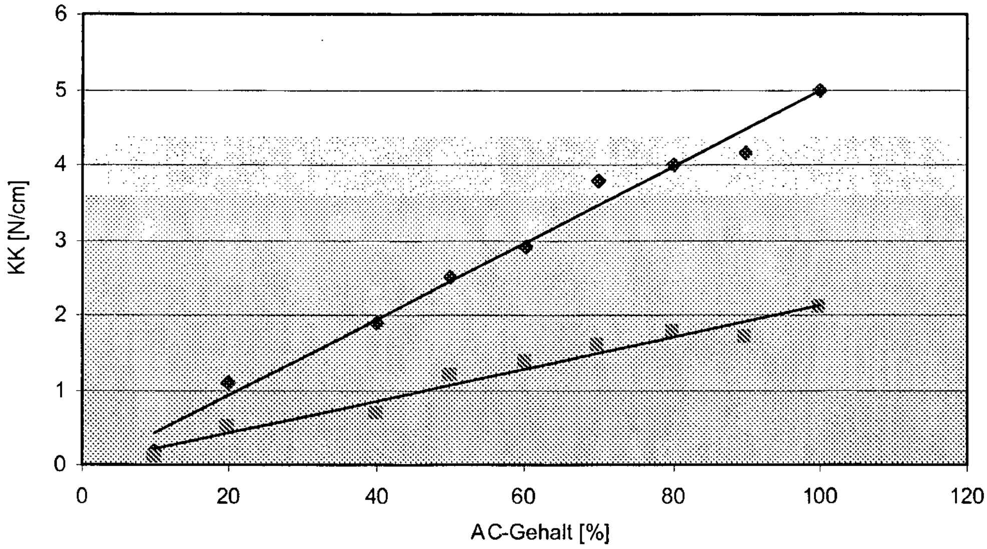


Diagramm 1

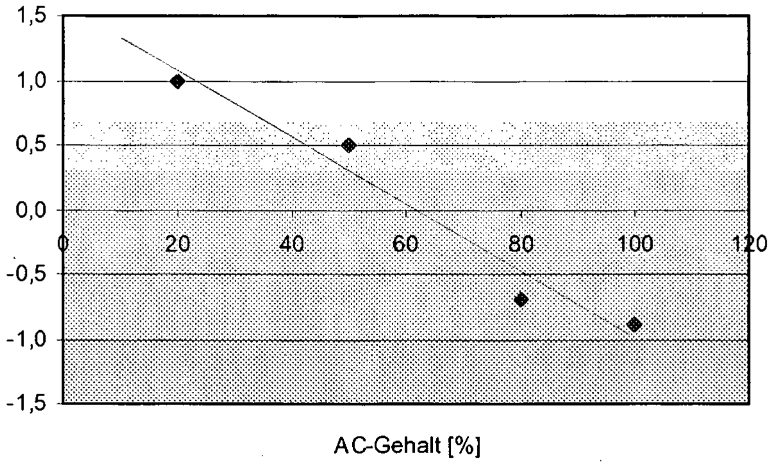


Diagramm 2

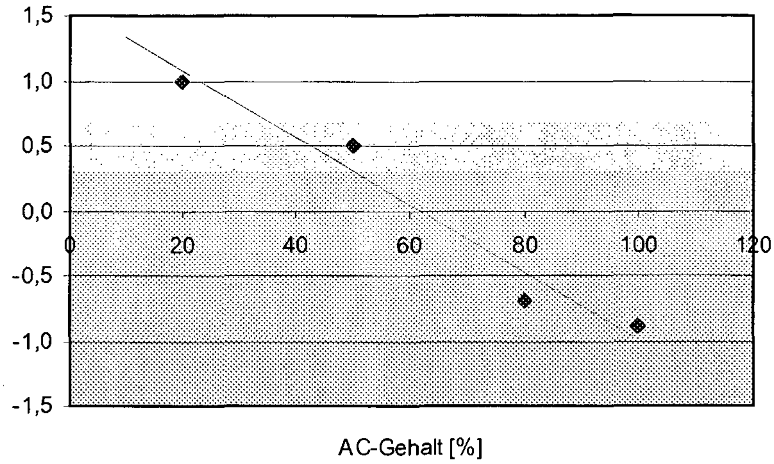


Diagramm 3

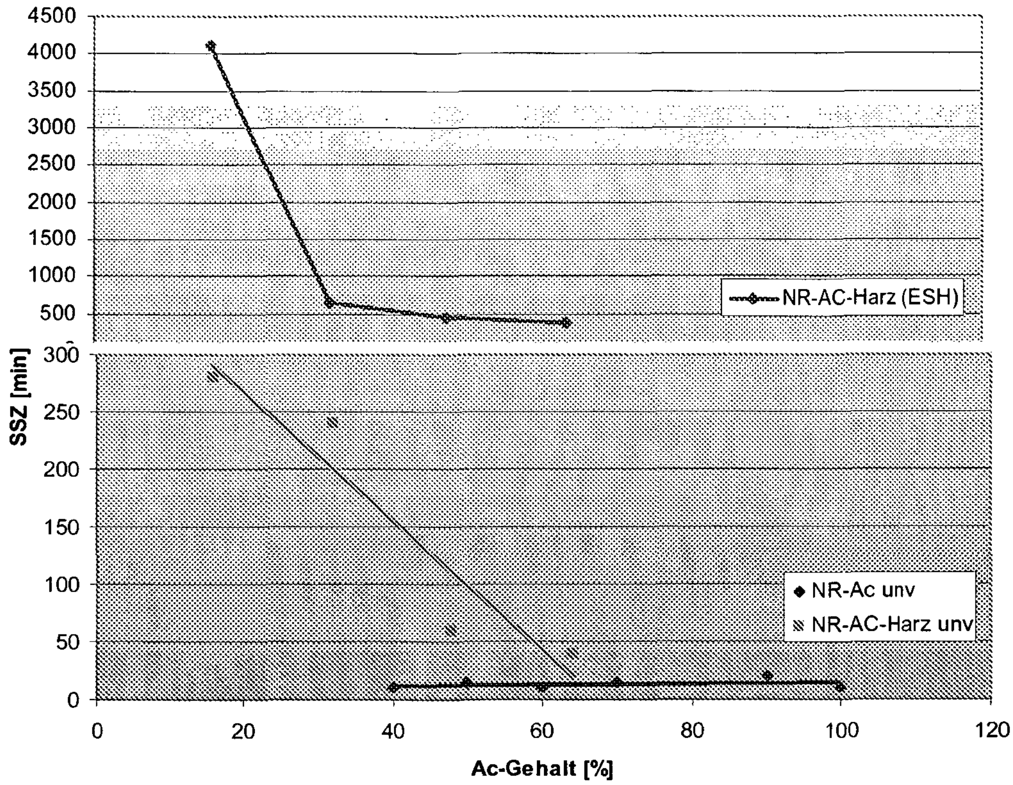


Diagramm 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- CA 698518
- JP 07324182 A
- JP 95331197 A
- JP 95278509 B
- WO 9411175 A
- WO 9525774 A
- WO 9707963 A
- US 5539033 A
- US 5550175 A
- US 6765078 B2
- DE 10036901 A1
- US 20040092685 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- **R. BRZOSKOWSKI, J.L. ; B. KALVANI.** *Kunststoffe,* 1990, vol. 80 (8), 922 ff
- Acrylic Adhesives. **DONATAS SATAS.** Handbook of Pressure Sensitive Adhesive Technology. Van Nostrand Reinhold, 396-456
- **D. SATAS.** Handbook of Pressure Sensitive Adhesive Technology. Verlag VAN NOSTRAND REINHOLD, 1989
- **DONATAS SATAS.** Handbook of Pressure Sensitive Adhesive Technology. van Nostrand, 1989, 444-514
- **T.G. FOX.** *Bull. Am. Phys. Soc.,* 1956, vol. 1, 123
- **DONATAS SATAS.** Handbook of Pressure Sensitive Adhesive Technology. van Nostrand, 1989
- Electron Beam Processing. Chemistry and Technology of UV and EB formulation for Coatings, Inks and Paints. SITA, 1991, vol. 1